# EUROPEAN PATENT APPLICATION

(11) **EP 4 801 159 A1**
(43) Date of publication of application: **02.09.2026**
(21) Application number: 23956836.3
(22) Date of filing: 27.10.2023
(51) Int. Cl.: H04W 72/115, H04W 16/28, H04W 72/1268, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing, 100190 (CN); CHEN, Lan, Beijing, 100190 (CN)
(74) Representative: Hoffmann Eitle
(86) International application number: PCT/JP2023/038872
(87) International publication number: WO 2025/088785

(57) **Abstract**

A terminal according to one aspect of the present disclosure includes: a receiving section that receives a physical uplink shared channel (PUSCH) configuration for a PUSCH and a configured grant configuration for a configured grant; and a control section that applies a number of layers equal to or less than 4 to PUSCH transmission based on the configured grant configuration when a maximum number of layers greater than 4 is configured by the PUSCH configuration.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel-15 NR supports up to four layers of uplink (UL) Multi-Input Multi Output (MIMO) transmission. For future NR, support for UL transmission with more than four layers is being considered to achieve higher spectral efficiency.

However, the number of layers/rank of the configured grantbased physical uplink shared channel (PUSCH) has not been sufficiently considered.

Therefore, one of the objects of the present disclosure is to provide a terminal, a radio communication method, and a base station that appropriately transmit a configured grant PUSCH. Solution to Problem

A terminal according to one aspect of the present disclosure includes: a receiving section that receives a physical uplink shared channel (PUSCH) configuration for a PUSCH and a configured grant configuration for a configured grant; and a control section that applies a number of layers equal to or less than 4 to PUSCH transmission based on the configured grant configuration when a maximum number of layers greater than 4 is configured by the PUSCH configuration.

### Advantageous Effects of Invention

According to one aspect of the present disclosure, a configured grant PUSCH can be transmitted appropriately.

### Brief Description of Drawings

[FIG. 1] FIG. 1 shows an example of a structure of a PUSCH-Config.
[FIG. 2] FIG. 2 shows an example of a structure of a ConfiguredGrantConfig.
[FIG. 3] FIG. 3 shows an example of a structure of a PUSCH-ServingCellConfig.
[FIG. 4] FIG. 4 shows another example of a structure of a ConfiguredGrantConfig.
[FIG. 5] FIG. 5 is a diagram to show an example of a schematic configuration of a radio communication system according to an embodiment.
[FIG. 6] FIG. 6 is a diagram to show an example of a configuration of a base station according to an embodiment.
[FIG. 7] FIG. 7 is a diagram to show an example of a configuration of a user terminal according to an embodiment.
[FIG. 8] FIG. 8 is a diagram to show an example of a hardware configuration of a base station and a user terminal according to an embodiment.
[FIG. 9] FIG. 9 is a diagram to show an example of a vehicle according to an embodiment.

### Description of Embodiments

### (SRS and PUSCH transmission Control)

In Rel-15 NR, a terminal (user terminal, User Equipment (UE)) may receive information (SRS configuration information, for example, parameters in an RRC control element "SRS-Config") used to transmit a measurement reference signal (for example, a sounding reference signal (SRS)).

More specifically, the UE may receive at least one of information regarding one or more SRS resource sets (SRS resource set information, e.g., the RRC control element "SRS-ResourceSet") and information regarding one or more SRS resources (SRS resource information, e.g., the RRC control element "SRS-Resource").

One SRS resource set may be associated with a predetermined number of SRS resources (may group together a predetermined number of SRS resources). Each SRS resource may be identified by an SRS resource indicator (SRI) or SRS resource identifier (ID).

The SRS resource set information may include an SRS resource set ID (SRS-ResourceSetId), a list of SRS resource IDs (SRS-ResourceId) used in the resource set, an SRS resource type, and information on SRS usage.

Here, the SRS resource type may indicate any of a periodic SRS (P-SRS), a semi-persistent SRS (SP-SRS), and aperiodic CSI (A-SRS). Note that the UE may transmit a P-SRS and a SP-SRS periodically (or periodically after activation) and transmit A-SRS based on an SRS request in the DCI.

In addition, the use (RRC parameter "usage", L1 (Layer-1) parameter "SRS-SetUse") may be, for example, beam management (beamManagement), codebook (CB), noncodebook (NCB), antenna switching, and the like. The SRS for codebook or noncodebook applications may be used to determine a precoder for codebook-based or noncodebook-based physical uplink shared channel (PUSCH) transmissions based on the SRI.

For example, in the case of codebook-based transmission, the UE may determine the precoder (precoding matrix) for PUSCH transmission based on the SRI, the transmitted rank indicator (TRI), and the transmitted precoding matrix indicator (TPMI). In the case of noncodebook-based transmission, the UE may determine the precoder for PUSCH transmission based on the SRI.

The SRS resource information may include an SRS resource ID (SRS-ResourceId), the number of SRS ports, the SRS port number, a transmission comb, an SRS resource mapping (e.g., time and/or frequency resource position, resource offset, resource period, number of repetitions, number of SRS symbols, SRS bandwidth, and the like), hopping-related information, an SRS resource type, a sequence ID, spatial relation information of the SRS, and the like.

The spatial relation information of the SRS (for example, the RRC information element "spatialRelationInfo") may indicate the spatial relation information between a predetermined reference signal and the SRS. The specified reference signal may be at least one of a synchronization signal/physical broadcast channel (SS/PBCH) block, a channel state information reference signal (CSI-RS), and an SRS (e.g., another SRS). The SS/PBCH block may also be referred to as a synchronization signal block (SSB).

The spatial relation information of the SRS may include at least one of an SSB index, a CSI-RS resource ID, and an SRS resource ID as an index of the predetermined reference signal.

Note that in the present disclosure, the terms SSB index, SSB resource ID, and SSB Resource Indicator (SSBRI) may be read interchangeably. In addition, CSI-RS index, CSI-RS resource ID, and CSI-RS resource indicator (CRI) may be read interchangeably. Furthermore, SRS index, SRS resource ID, and SRI may be read interchangeably.

The spatial relation information of the SRS may include a serving cell index, a BWP index (BWP ID), and the like corresponding to the above-mentioned specified reference signal.

When the spatial relation information regarding an SSB or CSI-RS and an SRS is configured for a certain SRS resource, the UE may transmit the SRS resource using the same spatial domain filter (spatial domain transmit filter) as the spatial domain filter (spatial domain receive filter) for receiving the SSB or CSI-RS. In this case, the UE may assume that a UE receiving beam for SSB or CSI-RS and the UE transmitting beam for SRS are the same.

In a case in which the spatial relation information regarding a certain SRS (target SRS) resource and another SRS (reference SRS) is configured for the SRS (target SRS), the UE may transmit the target SRS resource using the same spatial domain filter (spatial domain transmit filter) as the spatial domain filter (spatial domain transmit filter) for transmitting the reference SRS. That is, in this case, the UE may assume that the UE transmitting beam of the reference SRS and the UE transmitting beam of the target SRS are the same.

The UE may determine a spatial relation of the PUSCHs scheduled by a DCI (e.g., DCI format 0_1) based on the value of a predetermined field (e.g., an SRS resource identifier (SRI) field) in the DCI. More specifically, the UE may use spatial relation information (for example, the RRC information element "spatialRelationInfo") of the SRS resource determined based on the value of the predetermined field (for example, the SRI) for PUSCH transmission.

In Rel-15/16 NR, when codebook-based transmission is used for PUSCH, the UE may be configured by RRC with an SRS resource set for the codebook use having up to two SRS resources, and one of the up to two SRS resources may be indicated by DCI (1-bit SRI field). The transmitting beam for the PUSCH is specified by the SRI field.

The UE may determine the TPMI and number of layers (transmission rank) for the PUSCH based on the precoding information and number of layers field (hereinafter also referred to as the precoding information field). The UE may select a precoder from an uplink codebook for the same number of SRS ports as the number of SRS ports indicated by a higher layer parameter "nrofSRS-Ports" configured for the SRS resource specified by the SRI field, based on the TPMI, the number of layers, and the like.

In Rel-15/16 NR, when noncodebook-based transmission is used for PUSCH, the UE is configured by RRC with a noncodebook SRS resource set with up to four SRS resources, and one or more of the up to four SRS resources may be indicated by DCI (2-bit SRI field).

The UE may determine the number of layers (transmission rank) for the PUSCH based on the SRI field. For example, the UE may determine that the number of SRS resources specified by the SRI field is the same as the number of layers for the PUSCH. In addition, the UE may also calculate a precoder for the SRS resource.

In a case in which a CSI-RS (which may also be called an associated CSI-RS) associated with the SRS resource (or the SRS resource set to which the SRS resource belongs) is configured in a higher layer, the transmitting beam of the PUSCH may be calculated based on (measurements of) the configured associated CSI-RS. Otherwise, the transmitting beam for the PUSCH may be specified by the SRI.

Note that the UE may be configured to use codebook-based PUSCH transmission or noncodebook-based PUSCH transmission by a higher layer parameter "txConfig" that indicates a transmission scheme. The parameter may indicate a value of "codebook" or "noncodebook".

In the present disclosure, codebook-based PUSCH (codebook-based PUSCH transmission, codebook-based transmission) may refer to a PUSCH when a UE is configured with "codebook" as the transmission scheme. In the present disclosure, noncodebook-based PUSCH (noncodebook-based PUSCH transmission, noncodebook-based transmission) may refer to PUSCH when the UE is configured with "noncodebook" as the transmission scheme.

### (Dynamic Grant Based Transmission and Configured Grant Based Transmission)

For UL transmission in NR, there are dynamic grant based transmission and configured grant based transmission.

Dynamic grant based transmission is UL transmission using an uplink shared channel (e.g., a physical uplink shared channel (PUSCH)) in which resource allocation is dynamically indicated to a terminal (user terminal, user equipment (UE)) by downlink control information (DCI) (UL grant).

The configured grant based transmission is a UL transmission using an uplink shared channel (e.g., PUSCH) in which resource allocation is semi-statically indicated to the UE by higher layer signaling.

Dynamic grant based transmission may also be referred to as dynamic grant based PUSCH (DG PUSCH), UL Transmission with dynamic grant, PUSCH with dynamic grant, UL Transmission with UL grant, UL grant based transmission, UL transmission scheduled (transmission resources are configured) by dynamic grant, or the like.

Configured grant based transmission may also be referred to as configured grant based PUSCH (CG PUSCH), UL transmission with configured grant, PUSCH with configured grant, UL transmission without UL grant, UL grant free transmission, UL transmission scheduled by configured grant (transmission resources are configured), UL semi-persistent scheduling (SPS) transmission, or the like.

In the present disclosure, the terms configured grant (CG) and SPS may be read interchangeably.

Note that in addition, each of the DG and CG may also be referred to as an actual UL grant. That is, the actual UL grant may be higher layer signaling (e.g., radio resource control (RRC) signaling), physical layer signaling (e.g., DCI for activation, as described below), or a combination of these.

There are several types of configured grant based transmission (Type 1, Type 2, and the like).

In configured grant Type 1 transmission (Type 1 CG), configuration information for the CG (which may also be called parameters used for CG transmission, CG parameters, and the like) is configured in the UE using only higher layer signaling.

In configured grant Type 2 transmission (Type 2 CG), some of the CG parameters are configured in the UE by higher layer signaling. In CG Type 2 transmission, another part of the CG parameters may be notified to the UE by physical layer signaling (e.g., DCI for activation, described below).

In a case in which a Type 1 CG is configured, the UE may determine that one or more CGs have been triggered. The UE may transmit PUSCH without a dynamic grant using the configured CG PUSCH transmission resources (which may also be called CG resources, transmission occasions, and the like). Note that even in a case in which a CG PUSCH transmission is configured, the UE may skip CG PUSCH transmission when there is no data in the transmission buffer.

The UE may determine that one or more CGs have been triggered (or activated) when a Type 2 CG is configured and a signal for activation is notified. A signal for activation (e.g., activation DCI) may be a DCI (PDCCH) having a cyclic redundancy check (CRC) scrambled by a predetermined identifier (e.g., configured scheduling radio network temporary identifier (CS-RNTI)). Note that a signal for deactivating a CG (e.g., a DCI for deactivation) may be the same as or similar to a DCI for activation. Note that deactivation may be read as release and vice versa.

The UE may determine whether to transmit a PUSCH using CG resources configured by a higher layer based on the activation signal. The UE may release (also called deactivation, and the like) the resources (PUSCH) corresponding to the CG based on the signal for deactivation or expiration of a predetermined timer (elapse of a predetermined time).

The UE may transmit a PUSCH without a dynamic grant using activated CG PUSCH transmission resources (which may also be referred to as CG resources, transmission occasions, or the like). Note the even in a case in which CG PUSCH transmission is activated (active state), the UE may skip CG PUSCH transmission when there is no data in the transmission buffer.

The UE verifies whether one or more fields contained in the detected DCI have special values (special value(s)) and determines whether the DCI is a DCI for activation/deactivation of a Type 2 CG.

The above-mentioned CG parameters may be configured in the UE using CG configuration information of a higher layer (for example, a ConfiguredGrantConfig information element of the RRC layer). The CG parameters may include, for example, information that identifies a CG resource. The CG parameters may include, for example, information regarding the CG index, time offset, periodicity, and the like.

Here, the periodicity and the time offset may each be expressed in units of a symbol, a slot, a subframe, a frame, or the like. Periodicity may be indicated by, for example, a predetermined number of symbols. The time offset may be indicated, for example, by an offset relative to timing of a predetermined index (such as slot number = 0 and/or system frame number = 0).

Some of the CG parameters may be set by CG configuration information, and the rest may be set by PUSCH configuration information (for example, the RRC information element PUSCH-Config). For example, the maximum rank for a CG PUSCH may be indicated by a parameter provided by the PUSCH configuration information (e.g., RRC parameters maxRank, maxRankDCI-0-2-r16, or the like).

For Type 1 CG, the information normally specified by DCI regarding a DG PUSCH is set by CG configuration information. For example, information corresponding to the precoding information and number of layers field, sounding reference signal (SRS) resource indicator (SRI) field, MCS field, and antenna port field of the DCI is notified to the UE by the precodingAndNumberOfLayers field, srs-ResourceIndicator field, mcsAndTBS field, and antennaPort field included in the CG configuration information, respectively.

For example, the UE may determine the transmitted precoding matrix indicator (TPMI) and number of layers (transmission rank) for the CG PUSCH based on precodingAndNumberOfLayers.

In addition, repeated transmission may also be configured for CG. In a case in which repetition for CG is supported, repetition-related parameters may be configured by the CG configuration information. The repetition-related parameters may include, for example, an RRC parameter repK indicating a number of times a transport block (TB) is repeatedly transmitted, an RRC parameter repK-RV indicating an RV sequence to be used for repeated transmission, and an RRC parameter sequenceOffsetForRV indicating an RV offset of the starting RV of the first repetition for the second resource set.

The number of repeated transmissions may be any integer, for example, 1, 2, 4, 8, or the like. When the number of repeated transmissions is n (> 0), the UE may transmit one TB using n transmission opportunities. A CG PUSCH with a repeat transmission count greater than 1 may be referred to as a repeated CG PUSCH.

In addition, a single DCI (SDCI) based time division multiplexing (TDM) multi transmission/reception point (MTRP) PUSCH may be configured for the CG. In a case in which a SDCI-based TDM MTRP PUSCH for CG is supported, second TRP (or second SRS resource set) related parameters may be configured by CG configuration information. For example, information corresponding to the precoding information for the second SRS resource set and the number of layers field and SRI field of the DCI may be notified to the UE by a precodingAndNumberOfLayers2 field and a srs-ResourceIndicator2 field included in the CG configuration information, respectively.

### (Transmitting More Than Four Antenna Ports)

Rel-15/16 NR supports up to four layers of uplink (UL) multi input multi output (MIMO) transmission. For future radio communication systems, support for UL transmission with a number of layers greater than four is being considered in order to achieve higher spectral efficiency. For example, in preparation for Rel-18 NR, a maximum 6-rank transmission using 6 antenna ports, and a maximum 6- or 8-rank transmission using 8 antenna ports are being considered.

In addition, precoding matrices for UL transmissions with more than four antenna ports (number of antenna ports greater than four) are being considered. For example, a codebook for 8-port transmission (which may be referred to as an 8 Transmission (TX) UL codebook) is being considered.

In an antenna layout, Ng is a number of antenna groups. M is a number of antennas (or antenna elements) in a first dimension, and N is a number of antennas (or antenna elements) in a second dimension. The first and second dimensions are, for example, horizontal and vertical directions. P is the number of planes of polarization. When P = 2, the antenna becomes a cross-polarized antenna.

The antenna group may be referred to as a coherent group. A coherent group may include one or more coherent ports. For example, a partially coherent UE may have multiple coherent groups. Antenna ports within a coherent group may be coherent with each other. Antenna ports in different coherent groups do not need to be coherent.

Each coherent group may correspond to a different transmission panel/Tx chain/SRS resource set/RS resource set/spatial relation info/joint transmission configuration indication (TCI) state/UL TCI state/received TRP. Here, the SRS resource set may specifically correspond to an SRS resource set used for codebook or noncodebook purposes. In addition, each coherent group may correspond to a different received TRP. A coherent group may also be called a coherent antenna group, a port group, an antenna set, or the like.

The UE may report supported antenna group/antenna configuration information/coherent number as UE capability information. Moreover, the UE may be configured with coherent groups (e.g., the number of coherent groups, the number of ports included in each coherent group) by higher layer signaling.

The number of panels on which the antennas are arranged, orientation of the panels, coherency of each panel/antenna (fully coherent, partially coherent, non-coherent, or the like), arrangement of the antennas in a particular direction (horizontal, vertical, or the like), and polarization antenna configuration (single polarization, cross polarization, number of polarization planes, or the like) may differ from existing antenna layouts. dGH and dGV represent the horizontal and vertical spacings between centers of adjacent antenna groups, respectively.

In addition, while Rel-15/16 NR supported the transmission of one codeword (CW) in one PUSCH, for Rel-18 NR, it is being considered to allow a UE to transmit more than one CW in one PUSCH. For example, support for 2CW transmission for ranks 5-8, support for 2CW (dual CW) transmission for ranks 2-8, and the like are being considered. One CW corresponds to one transport block (TB).

Prior to Rel-17 NR, transmission of two TBs (e.g., TB #1 and TB #2) was supported for DL transmission (e.g., PDSCH transmission). In a case in which two TBs (e.g., TB #2) are supported, a DCI (e.g., DCI format 1_1) used to schedule the PDSCH may include specified fields for TB #1 and specified fields for TB #2 in the DCI. The specific field may be, for example, at least one of a modulation and coding scheme, a new data indicator, and a redundancy version.

In PUSCH transmission, the fact that dual CW is supported (or enabled) may be notified to the UE by the base station by a specified higher layer parameter. The specified higher layer parameter may be a higher layer parameter regarding the maximum number of CWs scheduled by a DCI (for example, maxNrofCodeWordsScheduledByDCI). A specified higher layer parameter (for example, maxNrofCodeWordsScheduledByDCI) may be included in the PUSCH configuration information (for example, PUSCH-config).

For example, when a specified higher layer parameter is set to 2 (e.g., maxNrofCodeWordsScheduledByDCI equals 2), this may mean that a specified field for TB#2 is included in the DCI. That is, for PDSCH, when a specified higher layer parameter indicates a specified value (e.g., 2), this may mean that a field for TB#2 exists (or that two codeword transmission is enabled).

In a case in which a specified higher layer parameter (e.g., maxNrofCodeWordsScheduledByDCI) indicates that two codeword transmission (e.g., two codeword transmission) is enabled, one of the two transport blocks may be disabled by the DCI format if specified conditions are met. For example, the specified condition may be that the MCS index (e.g., IMCS) and the RV index are each a specified value (e.g., IMCS = 26 and RV = 1) for the corresponding transport block.

In this way, in a case in which there is a TB where specified higher layer parameters are set to specified values (e.g. maxNrofCodeWordsScheduledByDCI = 2) and IMCS = 26 and RV = 1, the corresponding TB may be disabled to achieve dynamic indication (or switching) between more than four layers and less than four layers for PDSCH.

In the present disclosure, the first TB and TB1 of the two TBs may be read interchangeably. In the present disclosure, the second TB and TB2 of the two TBs may be read interchangeably.

Supporting methods based on existing specifications for NCB-based 8Tx PUSCH transmission using NSRS > 4 is being considered. Here, NSRS is a number of single-port SRS resources configured in the SRS resource set. The method extends an existing SRI indication table to include NSRS = 8 and Lmax = 8. Here, Lmax is the maximum number of MIMO layers. In the SRI indication for NCB-based PUSCH, a choice may be made between bitmap indication and a method based on existing specifications.

To configure PUSCH transmission by 8Tx UE, configuring the maximum number of MIMO layers by RRC by extending the range of maxRank and maxMIMO-Layers to 8 is being considered. The maximum rank is set by RRC signaling.

To support dual CW PUSCH transmission for ranks greater than 4 by an 8Tx UE, it is considered that a second MCS field (5 bits) will be indicated for a second CW for MCS indication. To support dual CW PUSCH transmission for ranks greater than four by an 8Tx UE, it is considered that a second set of fields, new data indicator (NDI, 1 bit) and redundancy version (RV, 2 bits), will be indicated. That is, additional MCS/NDI/RV for the second CW is supported.

However, there has been insufficient study of CG PUSCH using ranks greater than 4. When sufficient consideration is not given to such a CG PUSCH, there is a risk that communication quality/throughput will decrease.

Therefore, the inventors came up with a method for determining rank/number of layers for CG PUSCH transmission.

### (Various Interpretations and Others)

Embodiments according to the present disclosure will be described in detail with reference to the drawings as follows. Note that the embodiments (for example, cases) below may be employed individually or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having the capability of..." may be read interchangeably as "supporting/reporting the capability of...".

In the present disclosure, ceil(x), ceiling function, and ceiling function may be read interchangeably. In the present disclosure, floor(x), floor function may be read interchangeably. In the present disclosure, sqrt(x) and square root may be read interchangeably. In the present disclosure, x mod y, mod(x, y), mod function, and modulo operation may be read interchangeably. In the present disclosure, Σi = MNf(i), summation of f(i) over i = M, M + 1, ..., N, f(M) + f(M + 1) + ... + f(N) may be read interchangeably. C(x, y) represents a number of combinations (combinatorial coefficient) of selecting y items from x items, and is also called a binomial coefficient.

In the present disclosure, notations ab, a_b, and a with b added to the bottom right of a may be read interchangeably. In the present disclosure, notations ac, a^c, and a with c added to the upper right of a may be read interchangeably. In the present disclosure, notations abc, a_b^c, and a with b added to the bottom right of a and c added to the upper right may be read interchangeably. In the present disclosure, x~ may be expressed by adding ~ to the x, or may be referred to as x tilde. In the present disclosure, x- may be represented by placing a - on top of the x, or may be referred to as an x-bar.

In the present disclosure, pusch-Config (PUSCH-Config), pusch-Config in bwp-Dedicated (BWP-UplinkDedicated) in BWP-Uplink, PUSCH configuration, DG PUSCH configuration, first configuration, and configuration of UE-specific PUSCH parameters applied to a specific BWP may be read interchangeably. In the present disclosure, maxRank, maxRank in PUSCH-Config, maximum rank, maximum transmission rank, and maximum transmission rank applied to a PUSCH scheduled by DCI format 0_1 may be read interchangeably. In the present disclosure, txConfig, transmission configuration, txConfig in PUSCH-Config, and configuration of whether a UE uses CB-based transmission or NCB-based transmission may be read interchangeably.

In the present disclosure, pusch-ServingCellConfig (PUSCH-ServingCellConfig), pusch-ServingCellConfig in uplinkConfig (UplinkConfig) in ServingCellConfig, UE-specific PUSCH parameter configurations that are common across multiple BWPs of UEs of one serving cell, PUSCH configurations, and second configurations may be read interchangeably. In the present disclosure, maxMIMO-Layers, maxMIMO-Layers in PUSCH-ServingCellConfig, maximum number of MIMO layers, configuration of the maximum number of MIMO layers used for PUSCH in all BWPs of the corresponding UL of the serving cell, and maximum number of MIMO layers applied to PUSCH scheduled by DCI format 0_1 may be read interchangeably.

In the present disclosure, configuredGrantConfig (ConfiguredGrantConfig), configuredGrantConfig in bwp-Dedicated (BWP-UplinkDedicated) in BWP-Downlink, configured grant configuration, CG PUSCH configuration, and UL transmission configuration without dynamic grant may be read interchangeably.

In the present disclosure, the terms layer and MIMO layer may be read interchangeably. In the present disclosure, the terms rank, transmission rank, number of layers, and number of MIMO layers may be read interchangeably.

### (Radio Communication Method)

### <Point 1>

The following several procedures are defined in the specification as UE procedures for PUSCH transmission.
- Procedure 10: For PUSCH transmissions corresponding to either a Type 1 configuration grant or a Type 2 configuration grant activated by DCI format 0_0 or 0_1, parameters applied to transmission are provided by configuredGrantConfig, except for parameters provided by pusch-Config: dataScramblingIdentityPUSCH, txConfig, codebookSubset, maxRank, and scaling of UCI-OnPUSCH.
- Procedure 20: For a PUSCH transmission corresponding to a Type 2 configuration grant activated by DCI format 0_2, parameters applied to that transmission are provided by configuredGrantConfig, except for parameters provided by pusch-Config: dataScramblingIdentityPUSCH, txConfig, codebookSubsetDCI-0-2, maxRankDCI-0-2, UCI-OnPUSCH scaling, and resourceAllocationType1GranularityDCI-0-2.
- Procedure 30: In a case in which the UE has been provided with a transformPrecoder in configuredGrantConfig and the higher layer parameter tp-pi2BPSK has been provided in pusch-Config, the higher layer parameter is applied to the PUSCH transmission corresponding to the configured grant according to a procedure for determining a modulation order, redundancy version and TB size.

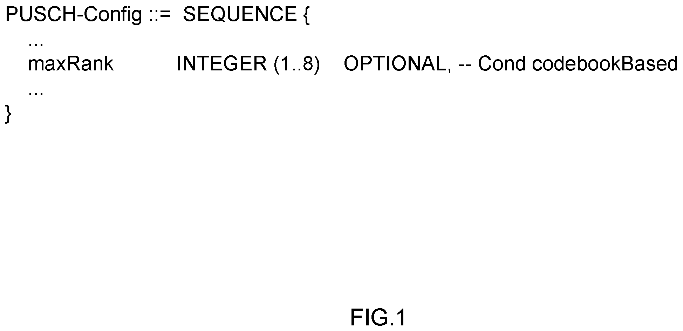

In the existing specification, the maxRank parameter for CG PUSCH is provided by pusch-Config and not by configuredGrantConfig (FIG. 1). On the other hand, in Rel. 18, it is considered that 8Tx UEs will not support CG transmission with dual CW PUSCH. In this case, when maxRank is configured by pusch-Config to be greater than 4, maxRank cannot be applied to CG PUSCH.

### <Embodiment 1>

This embodiment relates to point 1.

### <<Embodiment 1-1>>

A restriction may be defined that the maximum transmission rank (maxRank) configured/determined for CG PUSCH does not exceed 4, and UE behavior may be defined regarding how the maximum transmission rank for CG PUSCH is determined.

As a UE procedure for PUSCH transmission, at least one of the following procedures may be specified in the specification.
- Procedure 10: For PUSCH transmissions corresponding to either a Type 1 configuration grant or a Type 2 configuration grant activated by DCI format 0_0 or 0_1, parameters applied to transmission are provided by configuredGrantConfig, except for parameters provided by pusch-Config: dataScramblingIdentityPUSCH, txConfig, codebookSubset, maxRank, and scaling of UCI-OnPUSCH.
- Procedure 11a: A maximum number of layers for a configured grant PUSCH is given/determined by the minimum value between 4 and maxRank.
- Procedure 20: For a PUSCH transmission corresponding to a Type 2 configuration grant activated by DCI format 0_2, parameters applied to that transmission are provided by configuredGrantConfig, except for parameters provided by pusch-Config: dataScramblingIdentityPUSCH, txConfig, codebookSubsetDCI-0-2, maxRankDCI-0-2, UCI-OnPUSCH scaling, and resourceAllocationType1GranularityDCI-0-2.
- Procedure 30: When the UE has been provided with a transformPrecoder in configuredGrantConfig and a higher layer parameter tp-pi2BPSK has been provided in pusch-Config, the higher layer parameter is applied to the PUSCH transmission corresponding to the configured grant according to a procedure for determining modulation order, redundancy version and transport block size.

In addition to this UE procedure for PUSCH transmission, at least one of the following procedures may be specified in the specification:
- Procedure 12: When configuredGrantConfig is configured, the UE does not expect/assume that maxRank > 4 is configured in pusch-Config.
- Procedure 13: When the UE has configured maxRank > 4 in pusch-Config, then maxRank = 4 is assumed for configuration grant PUSCH transmissions (PUSCH corresponding to either a Type 1 configuration grant or a Type 2 configuration grant activated by DCI format 0_0/0_1/0_2) (the UE assumes maxRank=4 for configuration grant PUSCH transmissions).

### <<Embodiment 1-2>>

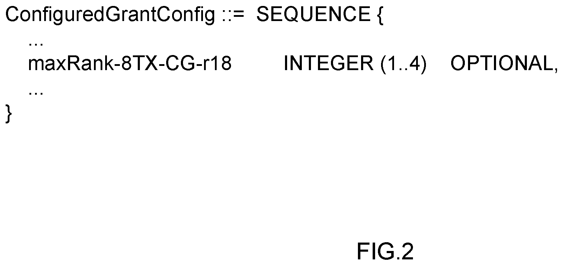

New higher layer parameters for CG PUSCH (e.g., maxRank-8TX-CG-r18) may be defined. maxRank-8TX-CG-r18 may be configured in configuredGrantConfig (FIG. 2). Candidate values for maxRank-8TX-CG-r18 may be {1, 2, 3, 4}. The parameters may be applied only to 8Tx UL configurations. The name maxRank-8TX-CG-r18 may be another name (for example, maxRank-CG-r18) that indicates that it is the

### maximum rank for CG.

In the UE procedures for PUSCH transmission in Embodiment 1-1, Procedure 11a may be replaced with the following procedure.
- Procedure 11b: When maxRank-8TX-CG-r18 is provided by configuredGrantConfig, maxRank-8TX-CG-r18 is applied to the configured grant transmission and the UE ignores the maxRank provided by pusch-Config.

In other words, at least one of the procedures 10, 11b, 20, and 30 may be specified in the specifications as a UE procedure for PUSCH transmission.

### <<Embodiment 1-3>>

For CG PUSCH, restrictions on the maximum number of TBs to be scheduled/indicated/transmitted or the maximum transmission rank may be defined.

In the UE procedures for PUSCH transmission in Embodiment 1-1, Procedure 11a may be replaced with the following procedure.
- Procedure 11c1: In the configured grant PUSCH, the maximum number of TBs scheduled/enabled is 1.

In other words, at least one of procedures 10, 11c1, 20, and 30 may be specified in the specifications as a UE procedure for PUSCH transmission.

The above-described procedure 11a may be replaced by the following procedure.
- Procedure 11c2: Even when maxRank > 4 is configured, the maximum number of TBs scheduled/enabled in the configured grant PUSCH is 1.

In other words, at least one of procedures 10, 11c2, 20, and 30 may be specified in the specifications as a UE procedure for PUSCH transmission.

In the UE procedures for PUSCH transmission in Embodiment 1-1, Procedure 11a may be replaced with the following procedure.
- Procedure 11c3: Even when maxRank > 4 is configured, the UE transmits a configuration grant PUSCH with a maximum number of layers of 4.

In other words, at least one of procedures 10, 11c3, 20, and 30 may be specified in the specifications as a UE procedure for PUSCH transmission.

According to this embodiment, even in a case in which a maximum transmission rank greater than 4 is configured for the dynamic grant PUSCH, the UE can properly transmit the configured grant PUSCH.

### <Point 2>

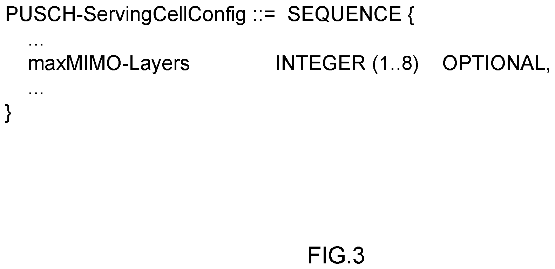

In the existing pusch-Config specification, maxRank is configured per BWP and is for codebook-based (CB-based) PUSCH, whereas maxMIMO-Layers is configured per cell (in pusch-ServingCellConfig) and is for noncodebook-based (NCB-based) PUSCH (FIG. 3).

When maxRank and maxMIMO-Layers exist, NW sets maxRank to the same value. Field maxMIMO-Layers corresponds to DCI format 0_1.

In the above-mentioned procedure 10, only maxRank is mentioned for CG PUSCH, and maxMIMO-Layers for CG PUSCH is not mentioned. It is unclear how to determine a maximum transmission rank for CG PUSCH in a case of NCB-based PUSCH.

### <Embodiment 2>

This embodiment relates to point 2.

Determination of maxMIMO-Layers for CG PUSCH may be defined.

In the UE procedures for PUSCH transmission of point 1, procedure 10 may be replaced with the following procedure.
- Procedure 10a: For a PUSCH transmission corresponding to either a Type 1 configuration grant or a Type 2 configuration grant activated by DCI format 0_0 or 0_1, the parameters applied to that transmission are provided by configuredGrantConfig, except for the parameters provided by pusch-Config: dataScramblingIdentityPUSCH, txConfig, codebookSubset, maxRank, scaling of UCI-OnPUSCH, and the parameter maxMIMO-Layers provided by pusch-ServingCellConfig.

In other words, at least one of procedures 10a, 20, and 30 may be specified in the specification as a UE procedure for PUSCH transmission.

According to the present embodiment, the UE can properly transmit the NCB-based PUSCH based on the configuration grant.

### <Embodiment 3>

This embodiment relates to a combination of the first and second embodiments.

### <<Embodiment 3-1>>

Embodiment 1-1 and Embodiment 2 may be combined.

As a UE procedure for PUSCH transmission, at least one of the following procedures may be specified in the specification.
- Procedure 10a: For a PUSCH transmission corresponding to either a Type 1 configuration grant or a Type 2 configuration grant activated by DCI format 0_0 or 0_1, the parameters applied to that transmission are provided by configuredGrantConfig, except for the parameters provided by pusch-Config: dataScramblingIdentityPUSCH, txConfig, codebookSubset, maxRank, scaling of UCI-OnPUSCH, and the parameter maxMIMO-Layers provided by pusch-ServingCellConfig.
- Procedure 12a: The maximum number of layers for configured grant PUSCH is given by the minimum of 4 and maxRank (in a case of 'codebook' set for 'txConfig') or by the minimum of 4 and maxMIMO-Layers (in the case of 'nonCodebook' set for 'txConfig').
- Procedure 20: For a PUSCH transmission corresponding to a Type 2 configuration grant activated by DCI format 0_2, parameters applied to that transmission are provided by configuredGrantConfig, except for parameters provided by pusch-Config: dataScramblingIdentityPUSCH, txConfig, codebookSubsetDCI-0-2, maxRankDCI-0-2, UCI-OnPUSCH scaling, and resourceAllocationType1GranularityDCI-0-2.
- Procedure 30: When the UE has been provided with a transformPrecoder in configuredGrantConfig and a higher layer parameter tp-pi2BPSK has been provided in pusch-Config, the higher layer parameter is applied to the PUSCH transmission corresponding to the configured grant according to a procedure for determining modulation order, redundancy version and transport block size.

### <<Embodiment 3-2>>

Embodiment 1-2 and Embodiment 2 may be combined.

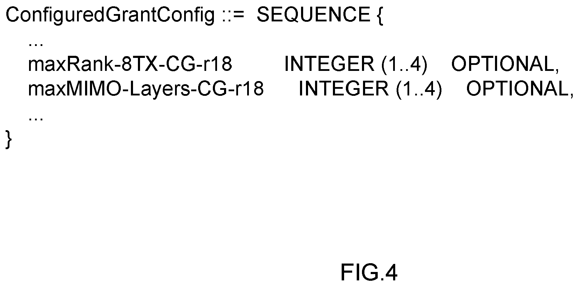

New higher layer parameters (for example, maxMIMO-Layers-CG-r18) for NCB-based CG PUSCH may be defined. The maxMIMO-Layers-CG-r18 may be configured in configuredGrantConfig (FIG. 4). Candidate values for maxMIMO-Layers-CG-r18 may be {1, 2, 3, 4}. The parameters may be applied only to 8Tx UL configurations. The name maxMIMO-Layers-CG-r18 may be another name indicating the maximum number of MIMO layers for CG (for example, maxMIMO-Layers-8TX-CG-r18).

In the UE procedure for PUSCH transmission in Embodiment 3-1, procedure 12a may be replaced with the following procedure.
- Procedure 12b: When maxRank-8TX-CG-r18 is provided by configuredGrantConfig (in a case of 'codebook' configured for 'txConfig'), maxRank-8TX-CG-r18 is applied to the configured grant transmissions and the UE ignores the maxRank provided by pusch-Config. When maxMIMO-Layers-CG-r18 is provided by configuredGrantConfig (in a case of 'codebook' configured for 'txConfig'), maxMIMO-Layers-CG-r18 applies to configured grant transmissions and the UE ignores maxMIMO-Layers provided by pusch-ServingCellConfig.

In other words, at least one of procedures 10a, 12b, 20, and 30 may be specified in the specification as a UE procedure for PUSCH transmission.

According to this embodiment, even in a case in which a maximum transmission rank greater than 4 is configured for a dynamic grant PUSCH, the UE can properly transmit a CB-based PUSCH based on the configured grant and an NCB-based PUSCH based on the configured grant.

### <Embodiment 4>

This embodiment relates to Type 2 CG PUSCH.

Assuming that there are no problems with Type 1 CG PUSCH after application of Embodiment 1, it is conceivable that only Type 2 CG PUSCH will be clarified for 8Tx. When 8Tx is configured for DG PUSCH, rules may be defined for the interpretation of the SRI field carried on the DCI that activates Type 2 CG PUSCH.

The rule may be one or more of the following options:
- Option 1: In the SRI for Type 2 CG PUSCH, 4 layers are always considered. In the SRI for Type 2 CG PUSCH, the UE may assume that the number of layers is 4.
- Option 2: In the SRI for Type 2 CG PUSCH, N (**≤** 4) layers are always considered. In the SRI for Type 2 CG PUSCH, the UE may assume that the maximum number of layers is 4.
- Option 3: New RRC parameters are defined. The parameter has a similar role to maxMIMO-Layers, but is specific to (Type 2) CG PUSCH (for NCB-based transmission). The new RRC parameters may be configured in ConfiguredGrantConfig or in pusch-ServingCellConfig.
- Option 4: In a Type 2 CG PUSCH activated by DCI format 0_1 for NCB-based PUSCH, the UE does not expect/assume that more than four SRS resources are indicated by the SRI field in that DCI. In the SRI field, the number of actual valid values may be up to N = Σk = 1MC(NSRS, k). Here, M = min{Lmax, NSRS}. The size of the SRI field may be ceil(N) bits when the higher layer parameter txConfig = 'nonCodebook'.

Embodiment 1 or 3 and Embodiment 4 may be combined.

According to the present embodiment, even when a maximum transmission rank greater than 4 is configured for the dynamic grant PUSCH, the UE can properly transmit the Type 2 configuration grant PUSCH.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling. The specific condition may indicate at least one of the following:
- at least one of the embodiments above being configured to be enabled.

At least one of the above-described embodiments may be applied only to a UE that has reported a specific UE capability or that supports the specific UE capability. The specific UE capability may indicate at least one of the following:
- UE supporting specific processing/operation/control/information for at least one of the embodiments above.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating that the operation of the embodiment(s) above is enabled/disabled.
- RRC parameter for a specific release (for example, Rel. 18/19). In Rel. YY (for example, YY is 18 or larger), an RRC parameter that enables operation XXX may be expressed as XXX_rYY (XXX-rYY).

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives a physical uplink shared channel (PUSCH) configuration for a PUSCH and a configured grant configuration for a configured grant; and
a control section that applies a number of layers equal to or less than 4 to PUSCH transmission based on the configured grant configuration when a maximum number of layers greater than 4 is configured by the PUSCH configuration.

### {Supplementary Note 2}

The terminal according to supplementary note 1, wherein the configured grant configuration indicates the number of layers.

### {Supplementary Note 3}

The terminal according to supplementary note 1 or 2, wherein when the PUSCH configuration indicates codebook-based transmission and the maximum number of layers, the control section applies the codebook-based transmission to the PUSCH transmission.

### {Supplementary Note 4}

The terminal according to any one of supplementary notes 1 to 3, wherein
the PUSCH configuration includes a first configuration for a bandwidth part (BWP) and a second configuration for a serving cell, and
when the first configuration indicates noncodebook-based transmission and the second configuration indicates the maximum number of layers, the control section applies the noncodebook-based transmission to the PUSCH transmission.

### (Radio Communication System)

Hereinafter, a structure of a radio communication system according to one embodiment of the present disclosure will be described. In this radio communication system, the radio communication methods according to the respective embodiments of the present disclosure described above may be used alone or may be used in combination for communication.

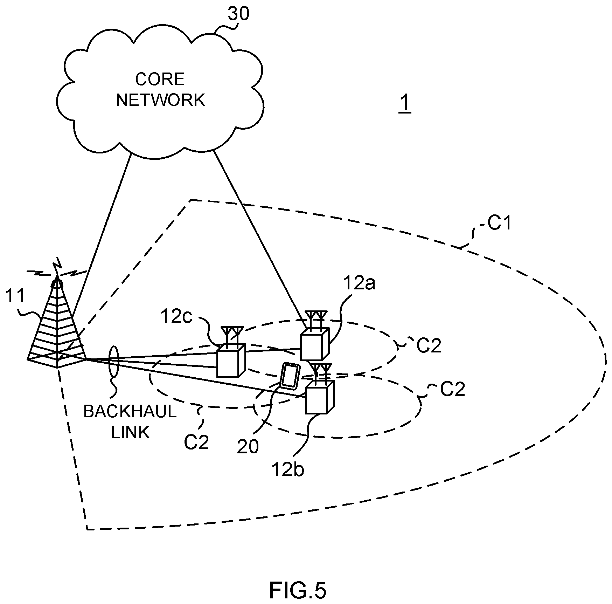

FIG. 5 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

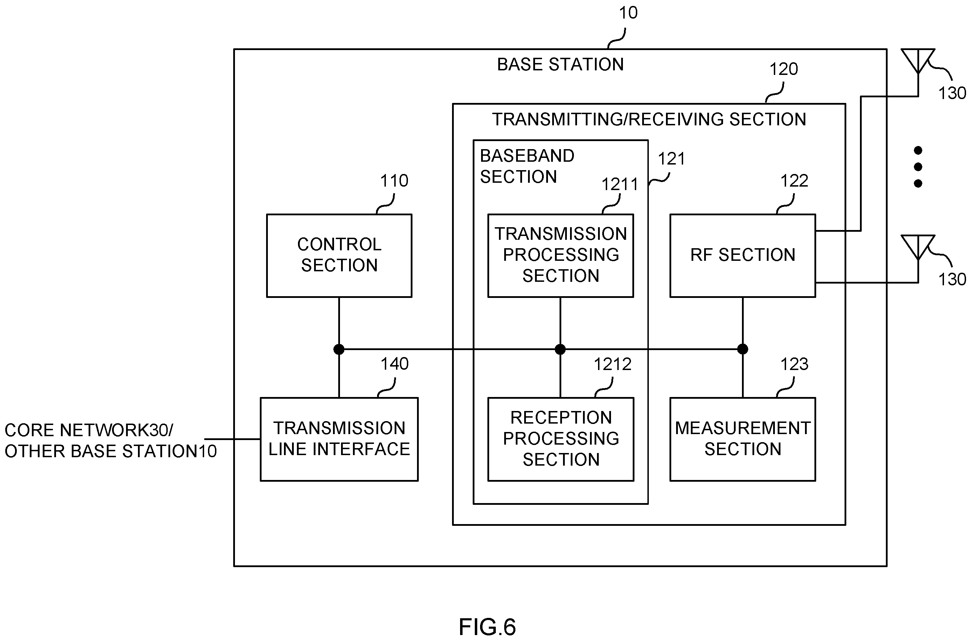

FIG. 6 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a physical uplink shared channel (PUSCH) configuration for a PUSCH and a configured grant configuration for a configured grant. The control section 110 may apply a number of layers equal to or less than 4 to PUSCH reception based on the configured grant configuration when a maximum number of layers greater than 4 is configured by the PUSCH configuration.

### (User Terminal)

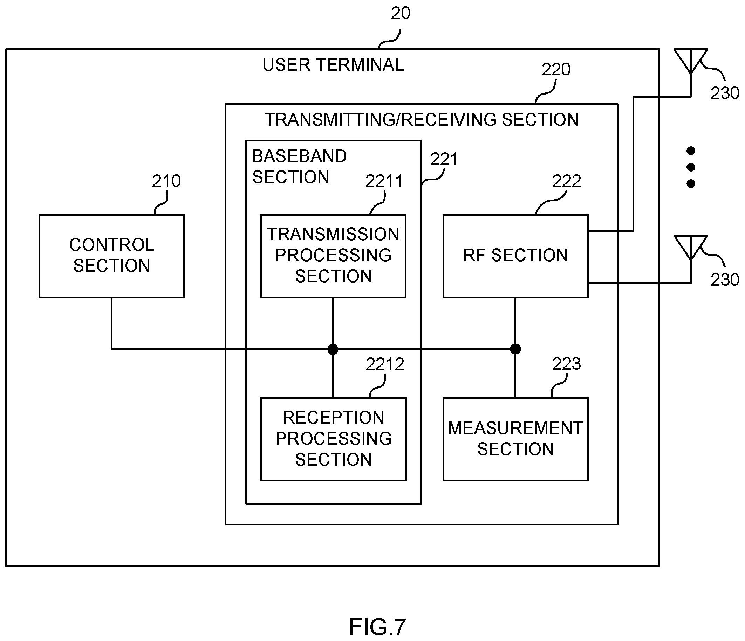

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a physical uplink shared channel (PUSCH) configuration (for example, at least one of pusch-Config and pusch-ServingCellConfig) for a PUSCH and a configured grant configuration (for example, configuredGrantConfig) for a configured grant. The control section 210 may apply a number of layers equal to or less than 4 to PUSCH reception based on the configured grant configuration when a maximum number of layers (for example, maxRank or maxMIMO-Layers) greater than 4 is configured by the PUSCH configuration.

The configured grant configuration may indicate the number of layers (for example, maxRank-8TX-CG-r18 or maxMIMO-Layers-CG-r18).

When the PUSCH configuration indicates codebook-based transmission (for example, txConfig set to 'codebook') and the maximum number of layers (for example, maxRank), the control section 210 may apply the codebook-based transmission to the PUSCH transmission.

The PUSCH configuration may include a first configuration (for example, pusch-Config) for a bandwidth part (BWP) and a second configuration (for example, pusch-ServingCellConfig) for a serving cell. When the first configuration indicates noncodebook-based transmission (for example, txConfig set to 'nonCodebook') and the maximum number of layers (for example, maxMIMO-Layers), the control section 210 may apply the noncodebook-based transmission to the PUSCH transmission.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

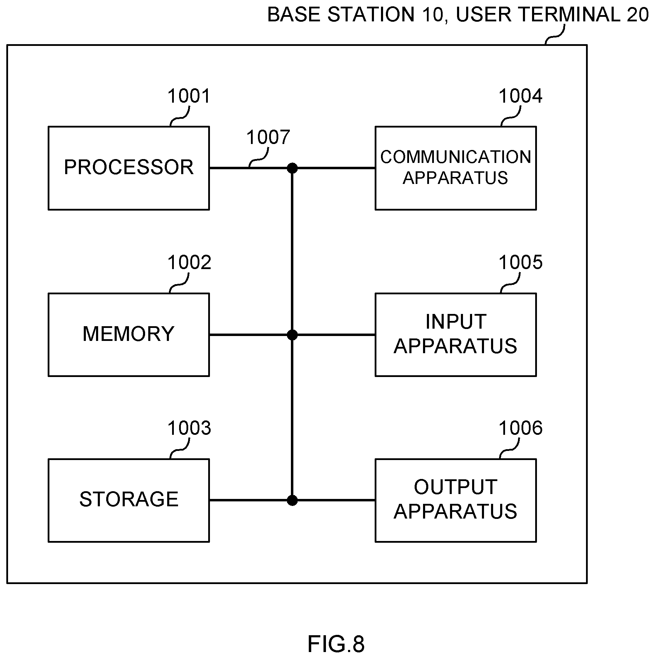

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

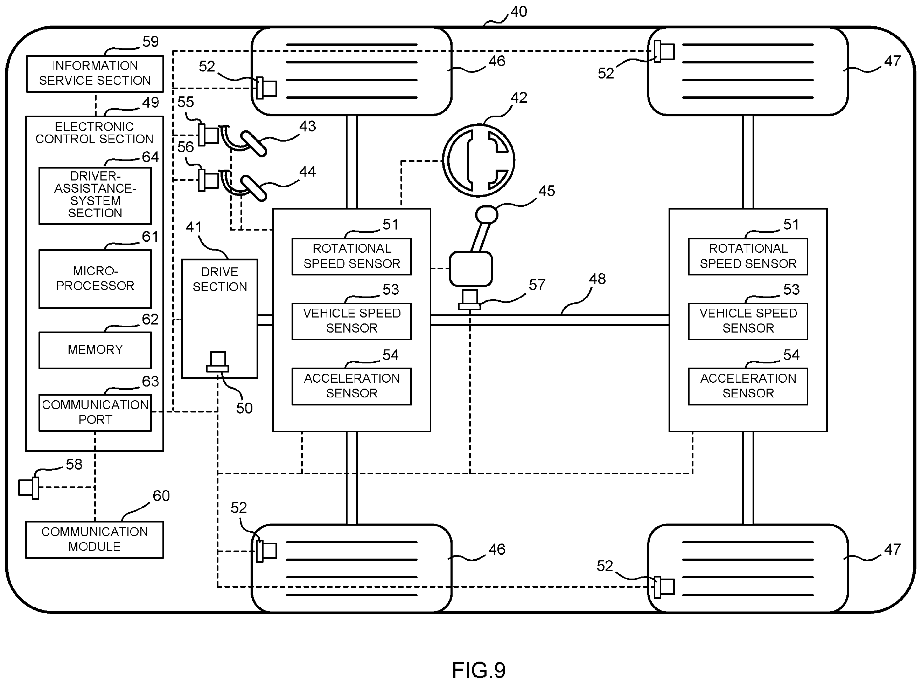

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a physical uplink shared channel (PUSCH) configuration for a PUSCH and a configured grant configuration for a configured grant; and
a control section that applies a number of layers equal to or less than 4 to PUSCH transmission based on the configured grant configuration when a maximum number of layers greater than 4 is configured by the PUSCH configuration.

2. The terminal according to claim 1, wherein
the configured grant configuration indicates the number of layers.

3. The terminal according to claim 1, wherein
when the PUSCH configuration indicates codebook-based transmission and the maximum number of layers, the control section applies the codebook-based transmission to the PUSCH transmission.

4. The terminal according to claim 1, wherein
the PUSCH configuration includes a first configuration for a bandwidth part (BWP) and a second configuration for a serving cell, and
when the first configuration indicates noncodebook-based transmission and the second configuration indicates the maximum number of layers, the control section applies the noncodebook-based transmission to the PUSCH transmission.

5. A radio communication method for a terminal, comprising:
receiving a physical uplink shared channel (PUSCH) configuration for a PUSCH and a configured grant configuration for a configured grant; and
applying, when the PUSCH configuration configures a maximum number of layers greater than 4, a number of layers equal to or less than 4 to PUSCH transmission based on the configured grant configuration.

6. A base station comprising:
a transmitting section that transmits a physical uplink shared channel (PUSCH) configuration for a PUSCH and a configured grant configuration for a configured grant; and
a control section that applies a number of layers equal to or less than 4 to PUSCH reception based on the configured grant configuration when a maximum number of layers greater than 4 is configured by the PUSCH configuration.
